# EUROPEAN PATENT APPLICATION

(11) **EP 1 486 408 A2**
(43) Date of publication of application: **15.12.2004**
(21) Application number: 03018604.3
(22) Date of filing: 18.08.2003
(51) Int. Cl.: B62K 3/00

(54) **Swing footboard structure for tricycle**

(30) Priority: 10.06.2003 CN 03247330
(71) Applicant: Hsin Lung Corp. (ShenZhen) Co. Ltd., Shenzhen 518109 (CN)
(72) Inventor: Chen Hsueh, Liao, Baoan District, Shenzhen 518109 (CN)
(74) Representative: VOSSIUS & PARTNER

(57) **Abstract**

The present invention relates to a swing structure for an onward vehicle. This swing structure is mainly consisting of a pair of symmetrical left swing and right swing, a bearing base, elastic media, a long screw, and a horizontal rod. This improved onward swing vehicle is simple in structure and easy for machining with essentially reduced cost. Moreover, this new swing structure is obviously reduced in friction and is of better elasticity. By adjusting the long screw, a proper pre-suppress can be achieved at the elastic media for different users.

## Description

This invention relates to the parts for a swinging onward vehicle, especially a swing structure for an improved onward vehicle.

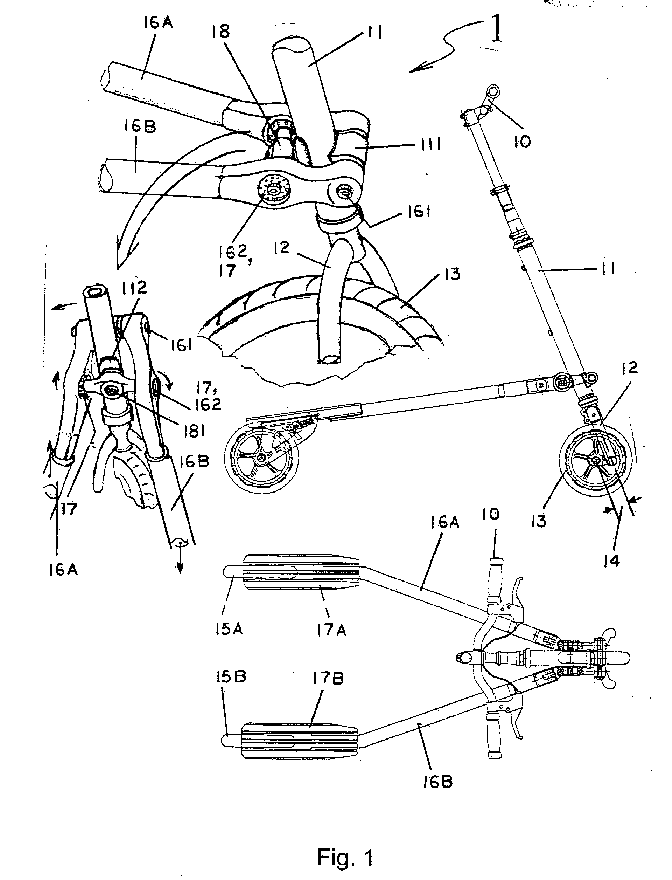

A conventional swinging onward vehicle is shown in Fig.1. With such a vehicle, the swinging as well as the onward power produced by turning the handle 10 and the front pipe 11 is mainly due to the existing backward distance 14 between the centerline of the front wheel 13 and the front fork 12. This is the basic principle used in swinging onward vehicles available on the market. Due to the swinging of the handle 10, serious swinging of the left and right rods 16A, 16B in the area between front pipe 11 and left and right rods 16A, 16B will be caused, and may even cause the left and right footplates 17A, 17B or the rear wheels 15A, 15B lift up from the ground, which will impact the use and safety of this kind of vehicle.

The swing of a typical tricycle is shown in Fig.1, with a front support 111 provided at proper elevation of front pipe 11 hinged to the forward shaft holes 161 of left and right rods 16A, 16B. In correspondence to the front support 111, a rear support shaft 112 is fixed to front pipe 11, which is hinged to the center hole 181 of a horizontal swinging rod 18. A sunken hole 162 with a spring 17 inside is provided adjacent to the front shaft holes 161 of the left and right rods 16A, 16B for the insertion of a horizontal swinging rod 18. Therefore, when the handle 10 is swung by the user, front support 111 of front pipe 11 moves in relation to the front shaft holes of the left and right rods 16A, 16B. With the deformation of spring 17 inserted into the sunken hole 161 of left and right rods 16A, 16B along with horizontal swinging rod 18, the left and right rods 16A, 16B could swing up and down and maintain the left and right footplates 17A, 17B without moving upward and the rear wheel rolling on ground while swinging handle 10.

The above mentioned swing structure for onward vehicle is complicate in structure and difficult to assemble, causes substantial friction and does not allow adjustment of the spring, and hence cannot meet the demands of different people. In addition, it is of high cost due to its complicate structure.

The object of the present invention is to provide an improved swing structure for an onward vehicle being simple in structure, easy to assemble, with reduced friction and having an adjustable spring.

This object is achieved with the features of the claims.

The present invention provides a swing structure for an onward vehicle. This swing structure is mainly consisting of a pair of symmetrical left swing and right swing, a bearing base, elastic media, a long screw and a horizontal rod. A vertical forward hole drilling through the long screw is provided both in front of the left and right swings, and a horizontal middle hole drilling through the long screw is properly provided at the back. A bearing base with holes corresponding to forward holes both in front of the left and right swings is fixed to the front pipe. Elastic media are provided above the left and right swings and between the left and right swings and the bearing base, wherein the elastic media, left and right swings and bearing base are locked together by the long screw. An inner hole with its position corresponding to the horizontal middle holes both at the left and right swings is provided at the back center of the bearing base; elastic media are provided at the middle holes of both sides of the left and right swings, all elastic media at the inner sides have one end in supporting of the vertical base at back, where the elastic media, left and right swings and the vertical base at back are run through by the horizontal rod, and locked by nuts at both sides of the horizontal rod; the back of left and right swings is connected to the left and right footplates and the rear wheel respectively.

For better positioning of the elastic media, sunken holes concentric to the forward holes for accommodating the elastic media are provided at both the upper and lower sides of the left and right swings and above the bearing base; and sunken holes concentric to the middle holes at both sides of the left and right swings as well as sunken holes concentric to the inner hole at both sides of the vertical base at back so as to insert into the elastic media.

Bulges concentric to the forward holes inserting into the elastic media are provided at both the upper and lower sides of the mentioned left and right swings and above the bearing base; and bulges concentric to the middle holes at both sides of the left and right swings as well as bulges concentric to the inner hole are also are provided at both sides of the vertical base at back so that to insert into the inner hole at the end of the elastic media.

Preferably, the mentioned elastic media is a spring or an elastic glue.

The mentioned elastic media above the right and left swings is preferably provided with a cover, respectively, and wash is provided above the bearing base at the end of the long screw; covers are also preferably provided at both ends of the horizontal rod, and all of the above mentioned covers are preferably provided with sunken holes for the insertion of elastic media.

The swing structure according to the present invention is simple in structure, and easy for machining with essentially reduced costs. Moreover, the swing structure of the present invention provides reduced friction and is of better elasticity. By adjusting the long screw, a proper pre-suppress can be achieved at the elastic media for different users.
- Fig. 1: shows a conventional swing structure for onward vehicles;
- Fig. 2: shows a structure sketch of the swing structure according to the present invention;
- Fig. 3: shows a disassembled sketch of the swing structure according to the present invention;
- Fig. 4: shows a plan sketch of the swing structure according to the present invention;
- Fig. 5: shows a swinging sketch of the swing structure according to the present invention; and
- Fig. 6: shows a torsion sketch of the swing structure according to the present invention.

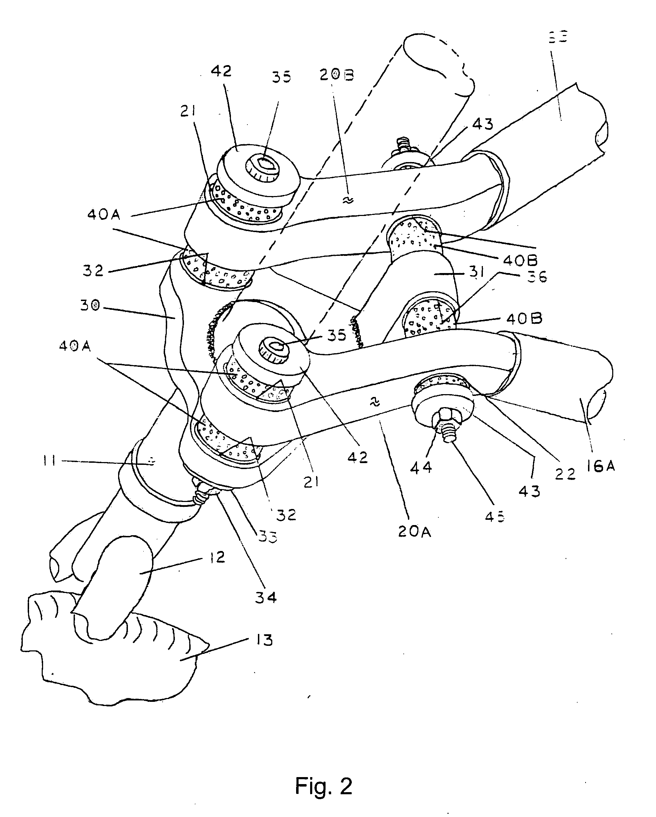

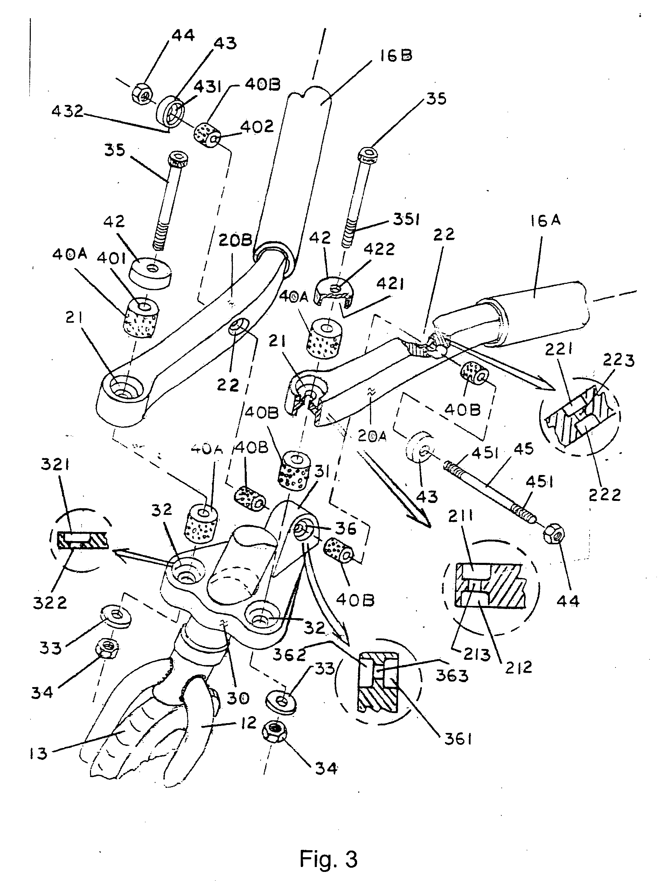

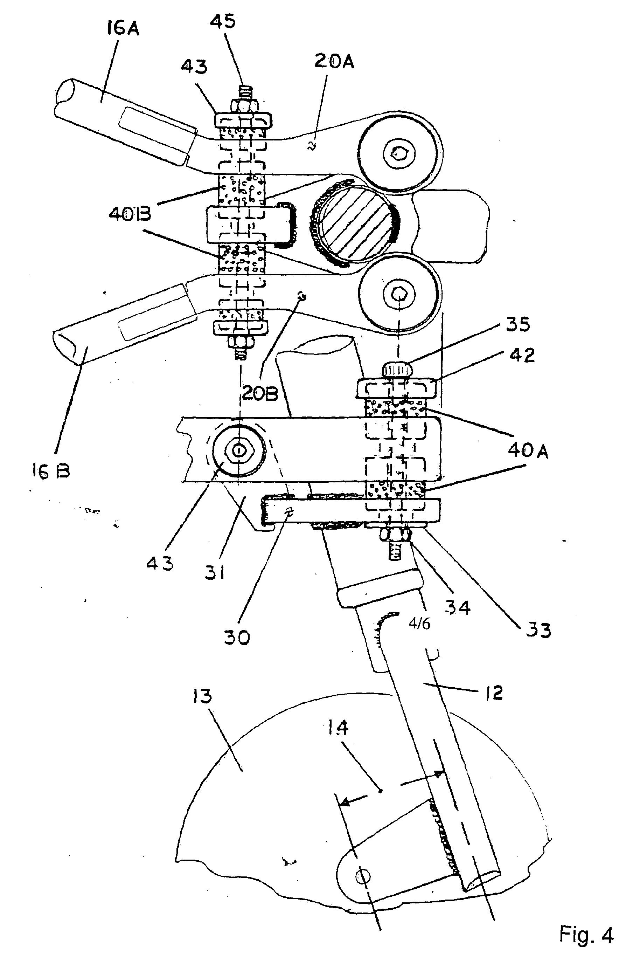

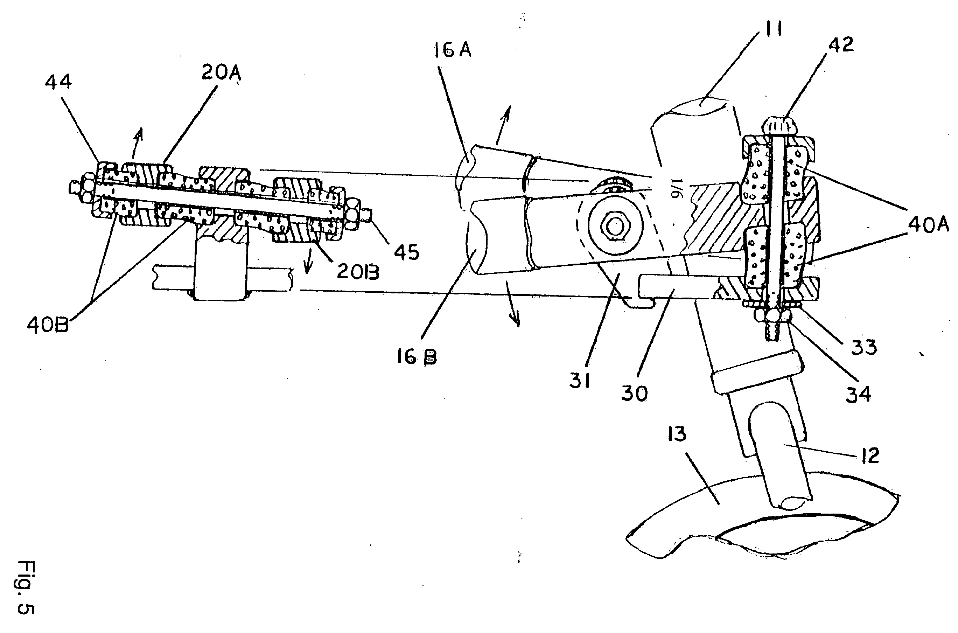

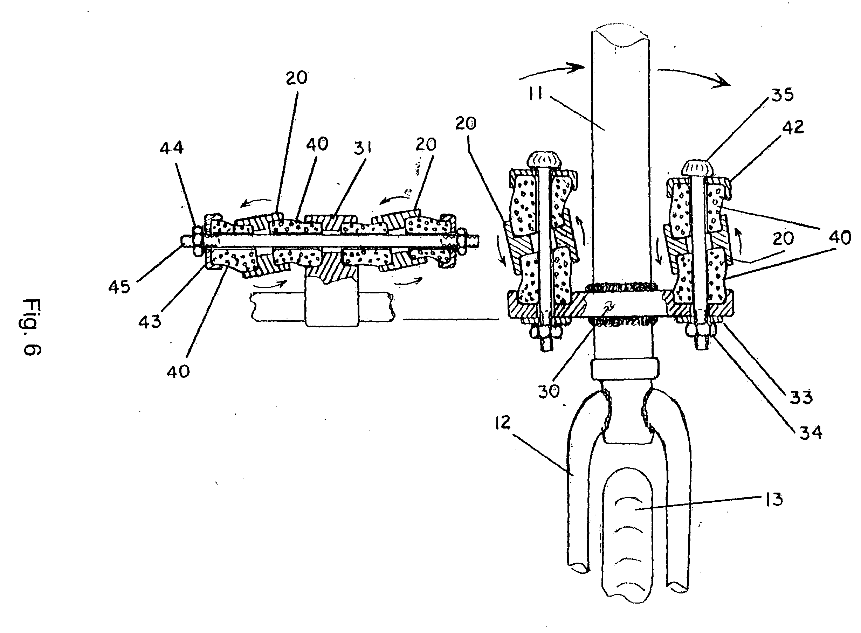

An improved swing structure for an onward vehicle according to a preferred embodiment of the present invention as shown in Fig. 2 to Fig. 6 is mainly consisting of a pair of symmetrical left swing 20A and right swing 20B, a bearing base 30, two upper covers 42, two external covers 43 and a plurality of elastic media 40A, 40B, a long screw 35, a horizontal rod 45 together with standard tightening parts and components.

The left swing 20A is a structure being long enough with a vertical forward hole 21 provided in the front end. On top of this forward hole 21, i.e., on its one end, is provided a sunken hole 211 for fitting the lower end of an elastic media 40A into the hole, and a sunken hole 212 is provided at the bottom for fitting the upper end of another elastic media 40A into the hole from the other side, and a concentric small diameter middle through hole 213 is drilled in the middle. A horizontal middle hole 22 is provided in a proper position of the back section of left swing 20A. The inner side of the middle hole 22 is provided with a sunken hole 221 for the fitting or accommodating of the external end of an elastic media 40B, and a sunken hole 222 is provided at the other side of hole 22 for accommodating the inner end of another elastic media 40B, and a concentric small diameter middle through hole 223 is drilled in the middle.

The other end of left swing 20A is provided with a left rod 16A for the installation of a left footplate 17A and a left rear wheel 15A.

The right swing 20B is symmetrical with the above-mentioned left swing 20A, and is also provided with a forward hole 21 in the front with one elastic media 40A each at both upper and lower sides, a middle hole 22 in the back of right swing 20B with one elastic media 40A each at both inner and outer side, and also with a left rod 16A provided at the back end of the right swing 20B for the installation of a right footplate 17B and a right rear wheel 15B.

The bearing base 30 is a symmetrical structure being fixed in a proper height of front pipe 11 and approximately parallel to the ground. A lower hole 32 is provided on each side of the front of bearing base 30. On top of this lower hole 32 there is provided a sunken hole 321 for accommodating the lower end of said elastic medium 40A accommodated in sunken hole 212 of forward hole 21 of the above-mentioned left and right swings 20A, 20B. A concentric small diameter through-hole 322 is adjacent to sunken hole 321. In line with the middle holes 22 of left and right swings 20A, 20B there is provided an inner hole 36 at a rear vertical base 31 provided on the bearing base 30. Each of the right and left sides of this inner hole 36 are provided with sunken holes 361, 362 for accommodating the inner end of said elastic medium 40B fixed in sunken hole 221 of the middle hole 22 of the above-mentioned left and right swings 20A, 20B, respectively, and a concentric small diameter through hole 363 in the middle.

In this preferred embodiment, both the right and left sides in the front are provided with a top cover 42 with sunken hole 421 for accommodating the upper end of the elastic medium 40A fixed in sunken hole 211 of the forward hole 21 of left and right swings 20A, 20B. The long screw 35 is inserted through middle hole 422 of top cover 42, middle hole 401 of elastic medium 40A, through hole 213 of forward hole 21, middle hole 401 of elastic medium 40A, through hole 322 of lower hole 32 as well as washer 33 from up to down into a nut 34. Both the right and left sides in the back are provided with an external cover 43 with top sunken hole 431 for accommodating the external end of the elastic medium 40A fixed in sunken hole 221 of the middle hole 22 of left and right swings 20A, 20B. A horizontal rod 45 is inserted through middle hole 432 of external cover 43, middle hole 402 of elastic medium 40B, through hole 223 of left middle hole 22, middle hole 402 of elastic medium 40B, through hole 363 of inner hole 36, middle hole 402 of elastic medium 40B, through hole 223 of right middle hole 22, middle hole 432 of external cover 43 from left to right into nut 44.

The above-mentioned sunken holes can be plan or convex, as it is mainly used for the positioning of elastic media. Namely, when elastic glue is used, it is better to adopt sunken hole for positioning, and when spring is used, it can be plan or convex.

The swing structure of the present invention is simple in structure, and easy for machining with essentially reduced cost. Moreover, this practical new pattern is obviously reduced in friction and is of better elasticity. By adjusting the long screw, a proper pre-suppress can be achieved at the elastic media for different users.

## Claims

1. Swing structure for an onward vehicle comprising a front pipe (11), left and right footplates (17A, 17B), and rear wheels (15A, 15B), said swing structure comprising:
a pair of symmetrical left swing and right swing (20A, 20B), a bearing base (30), elastic media (40A, 40B), a long screw (35) and a horizontal rod (45),
wherein a vertical forward hole (21) is provided both at a front portion of the left and right swings, and a horizontal middle hole (22) is provided at the back portion of each swing (20A, 20B);
a bearing base (30) with holes corresponding to said forward holes (21) of the left and right swings (20A, 20B) is fixed to the front pipe (11);
first elastic media (40A) are provided above the left and right swings (20A, 20B) and between the left and right swings (20A, 20B) and the bearing base (30), wherein the elastic media (40A), left and right swings (20A, 20B) and bearing base (30) are connected by said long screw (35);
an inner hole (36) with its position corresponding to said horizontal middle holes (22) is provided at the back center (31) of the bearing base (30);
second elastic media (40B) are provided at the middle holes (22) at both sides of the left and right swings (20A, 20B);
all elastic media (40B) at the inner sides have one end in supporting of the vertical base (31), wherein the elastic media (40B), left and right swings (20A, 20B) and the vertical base (31) are connected by said horizontal rod (45), and locked by nuts (44) at both sides of the horizontal rod (45);
the back of the left and right swings (20A, 20B) being connected to the left and right footplates (17A, 17B) and the rear wheel (15A, 15B), respectively.

2. The swing structure of claim 1, wherein sunken holes (211, 212) concentric to the forward holes (21) for accommodating said first elastic media (40A) are provided at both the upper and lower sides of the left and right swings (20A, 20B) and above the bearing base (30); and sunken holes (221, 222) concentric to the middle holes (22) at both sides of the left and right swings (20A, 20B) as well as sunken holes (361, 362) concentric to the inner hole (36) at both sides of the vertical base (31) are provided for accommodating said second elastic media (40B).

3. The swing structure of claim 1 or 2, wherein bulges concentric to the forward holes (21) accommodating said first elastic media (40A) are provided at both the upper and lower sides of the left and right swings (20A, 20B) and above the bearing base (30); and bulges concentric to the middle holes (22) at both sides of the left and right swings (20A, 20B) as well as bulges concentric to the inner hole at both sides of the vertical base (31) provided so as to insert into said second elastic media (40B).

4. The swing structure according to claim 1, 2 or 3, wherein said elastic media are of spring or elastic glue.

5. The swing structure of any of claims 1 to 4, wherein said elastic media (40A, 40B) above the right and left swings (20A, 20B) are provided with a cover (42), respectively, and a washer (33) is provided above the bearing base (30) at the end of the long screw (35), wherein covers (43) are also provided at both ends of the horizontal rod (45); all of said covers being provided with sunken holes (421, 431) for accommodating said elastic media.
